# EUROPEAN PATENT SPECIFICATION

(11) **EP 3 356 125 B1**
(45) Date of publication and mention of the grant of the patent: **01.04.2020**
(21) Application number: 16794424.8
(22) Date of filing: 27.09.2016
(51) Int. Cl.: B29C 67/24, C04B 35/83

(54) **PROCEDURE FOR THE REALIZATION OF COMPOSITE MATERIALS MADE OF CARBON FIBER**
VERFAHREN ZUR HERSTELLUNG VON VERBUNDWERKSTOFFEN AUS KOHLENSTOFFFASERN
PROCÉDÉ POUR LA RÉALISATION DE MATÉRIAUX COMPOSITES EN FIBRE DE CARBONE

(30) Priority: 28.09.2015 IT UB20153953
(43) Date of publication of application: 08.08.2018
(73) Proprietor: M.D.P. Materials Design & Processing S.r.l., 05100 Terni (TR) (IT); Natali, Maurizio, 62014 Petriolo (MC) (IT); Torre, Luigi, 05035 Narni (TR) (IT)
(72) Inventor: NATALI, Maurizio, 62014 Petriolo (MC) (IT); TORRE, Luigi, 05035 Narni (TR) (IT); TERENZI, Andrea, 05100 Terni (TR) (IT); IANNONI, Antonio, 05100 Terni (TR) (IT); PETRUCCI, Roberto, 05100 Terni (TR) (IT)
(74) Representative: Brunacci, Marco
(86) International application number: PCT/IB2016/055774
(87) International publication number: WO 2017/055998

(56) References cited:
- BUCKLEY J ET AL: "Rapid microwave processing and production of carbon-carbon composites", 1 January 1997 (1997-01-01), MICROWAVES: THEORY AND APPLICATION IN MATERIALS PROCESSING IV : [PROCEEDINGS OF THE FIRST WORLD CONGRESS ON MICROWAVE PROCESSING, HELD IN ORLANDO, FLORIDA, JANUARY 5 - 9, 1997], AMERICAN CERAMIC SOCIETY, PAGE(S) 499 - 506, XP009188174, abstract; p.501, para.1

## Description

### Technical Field

The present invention relates to a procedure for the production of composite materials made of carbon fiber, in particular "carbon-carbon" composite materials.

### Background Art

"Carbon-carbon" composite materials, for the sake of simplicity referred to as "CC composites" are made up of carbon fibers inserted in a matrix, usually derived from organic or polymeric substances, in order to achieve a finished composite material which combines the properties of carbon fibers with high specific resistance and strength, with the refractory properties of the carbonaceous matrix.

CC composites are therefore particularly suitable for applications which require high mechanical and thermal resistance.

Furthermore, they are particularly lightweight, having a density between 1.6 g/cm³ and 2 g/cm³, these density values being significantly lower than those of metals or other ceramic materials.

Because of these advantageous properties, such composite materials are particularly suitable for application in the aerospace industry, in particular to make propulsion devices of rocket motors or some parts of these such as, e.g., the groove sections of the nozzles.

For these devices, in fact, both lightness to maximize the payload, and a high resistance to strong thermal and mechanical wear created on the surfaces of the various components are required.

In general, CC composite materials are particularly suitable for application in the production of components, devices and other mechanical parts for which it is particularly advantageous to combine lightness (low specific density), mechanical strength and heat resistance.

Not only in the aerospace industry therefore, but also in the automotive field, e.g. to make the latest generation of brakes or other specific components of racing cars and not only, or motorcycle field, or structural field, etc.

Despite the enormous advantages tied to the use of CC composites, their production is very expensive and difficult to implement on a large scale.

The known procedures for the production of such composites, in fact, prove to be high-energy consuming and, therefore, very expensive.

The known procedures provide, in fact, for a first step in which preformed carbon fibers are grafted in a matrix made up mainly of carbon, previously made, so as to form a "matrix-fiber" composite, and for a second step in which the obtained composite undergoes heat treatment at very high temperature. Such heat treatments initially allow a carbonization (at temperatures of about 1000°C) of the matrix-fibers composite and subsequently its graphitization (at temperatures of about 2500°C and higher).

The carbonization of the "matrix-fibers" product results in a disintegration of the chemical bonds of the substances contained in it, so that, at the end of the process, only the carbonaceous part remains.

The subsequent graphitization allows restructuring the chemical bonds of the carbonized composite, in a certain sense finishing the previously-obtained carbonaceous part, so as to obtain the typical final chemical structure of the carbon-carbon composites.

A drawback of the known procedures is tied to the energy consumption required for the production of the CC composites.

The high temperatures and the times required to make the carbonization and graphitization processes happen imply very high energy consumptions.

This entails high production costs and therefore high unit prices of the finished product.

Another drawback is tied to the technologies used to provide the above adequate temperatures.

Usually, in fact, traditional electric ovens are used, specially designed to provide heat via convection, conduction and radiation.

These ovens do not allow localized heating and, to ensure heating which is as uniform as possible, they must be put into operation so as to create the right thermal conditions in the entire environment in which the composite to be treated is made to enter.

In other words, a part of the consumed energy must be used to keep the oven walls hot, to cope with natural heat losses, with a consequent increase in management costs.

A known procedure is shown by the document: Buckley et al., Microwave: Theory and Appl. In Mat. Proc IV, 499-506*.*

### Description of the Invention

The main aim of the present invention is to provide a procedure for the production of composite materials made of carbon fiber which allows lowering the cost of the composites obtained.

One object of the present invention is to provide a procedure for the production of composite materials made of carbon fiber, which allows decreasing the amount of energy and time required to produce the composites themselves. Another object of the present invention is to provide a procedure for the production of composite materials made of carbon fiber which allows to overcome the mentioned drawbacks of the prior art within the ambit of a simple, rational, easy, effective to use and affordable solution.

The above mentioned objects are achieved by the present procedure for the production of composite materials made of carbon fiber having the characteristics of claim 1.

### Brief Description of the Drawings

Other characteristics and advantages of the present invention will become better evident from the description of a preferred, but not exclusive, embodiment of a procedure for the production of composite materials made of carbon fiber, illustrated by way of an indicative, but non-limiting example in the accompanying drawings, in which:
Figures 1 and 2 are schematic views of a first step of the procedure according to the invention;
Figure 3 is a schematic view of subsequent steps of the procedure according to the invention.

### Embodiments of the Invention

With particular reference to these figures, a procedure has been globally illustrated for the production of composite materials made of carbon fiber, in particular of carbon-carbon composite materials, for the sake of simplicity referred to as "CC composites".

The procedure comprises a step of arrangement A of carbon fibers 1 in a carbonaceous matrix 2 so as to form a treatable composite material 3.

The carbon fibers 1 are preformed, i.e., they are inserted in the carbonaceous matrix 2 already oriented according to previously-selected structures, made according to the mechanical characteristics to be given to the final composite materials.

In particular, the preformed fibers are obtained from at least one of the following weaving processes known as "weaving", "braiding", "knitting" and "stitching".

The "weaving" process is a process particularly suitable for arranging the fibers on flat surfaces.

The "braiding" process, on the contrary, is a process that is well suited to arrange the fibers on curved surfaces, in particular on surfaces having a cylindrical symmetry (cylindrical, ellipsoidal, conical, etc.).

The "knitting" and "stitching" processes are typically used to arrange the fibers according to three-dimensional structures.

More particularly, the fibers can be oriented in a direction (ID), two directions (2D) up to "n" directions (nD), depending on the properties that the final composite must have.

In this regard, the following fiber preforms are mentioned which can be used in the production of CC composites:
- 1D preforms, obtained by superimposing unidirectional layers of fibers;
- 2D preforms, obtained by superimposing fabric fibers derived from "weaving" or "braiding" processes;
- 3D preforms, obtained from multidirectional architectures of fibers derived from "weaving", "braiding", "knitting" and "stitching" processes.
- 4D or 5D preforms, characterized by having groups of fibers oriented along four or five different directions respectively, obtained from multidirectional architectures of fibers and these too derived from the above processes.

These latter preforms are advantageously suitable for carbon/carbon manufactured products which undergo extreme thermal and mechanical loads. In particular, the preforms obtained using the "braiding" technology are very suitable and economically viable for all cylindrically symmetrical structures such as, e.g., the nozzles of rocket engines.

Different preforms cannot be ruled out, such as e.g., preforms obtained from almost isotropic felts of the type of "needle punched non-woven fabric", in English-speaking literature called "needle punched entangle non-woven". Advantageously, the fibers 1 are obtained from the treatment of polyacrilonite (PAN), i.e., subjecting this type of polymer to chemical and carbonization processes.

The use cannot be ruled out of fibers 1 derived from other materials such as, e.g., Rayon, hydrocarbons from the gaseous phase, isotropic and anisotropic pitch, phenolic fibers (Kynol®), etc.

The fibers 1, as previously written, are intended to be arranged in a carbonaceous matrix 2.

In the present treatise by "carbonaceous matrix" is meant any matrix with high content of carbon, generally obtained through the treatment of organic or polymeric substances.

In particular, the carbonaceous matrix 2 onto which to graft the fibers 1 is a carbon-phenolic composite material.

More in particular, the carbonaceous matrix 2 is obtained from a precursor polymer with a high carbonaceous residue (char-yield) which, after undergoing special heat-chemical treatments, produces the above carbon-phenolic composite material.

The treatable composite 3, deriving from the step of arrangement A, then undergoes a step of heating B adapted to transform the same into a finished composite 4.

According to the invention, the step of heating B is at least partially induced by electromagnetic microwaves 5 generated by at least one source 6 of electromagnetic waves and adapted to increase the temperature of the treatable composite 3.

This way, by means of the interaction of the microwaves with the treatable composite 3, the latter is heated until the temperatures are achieved needed for transformation into finished composite 4.

In the present treatise, by "microwave" is meant electromagnetic waves with frequencies between a minimum of about 2.5 GHz and a maximum of about 300 GHz.

The action of the microwaves 5, directed on the composite to be treated, heats the treatable composite 3 from the inside outwards thereby favoring the homogeneity of the transformation processes, and therefore of the finished composite 4.

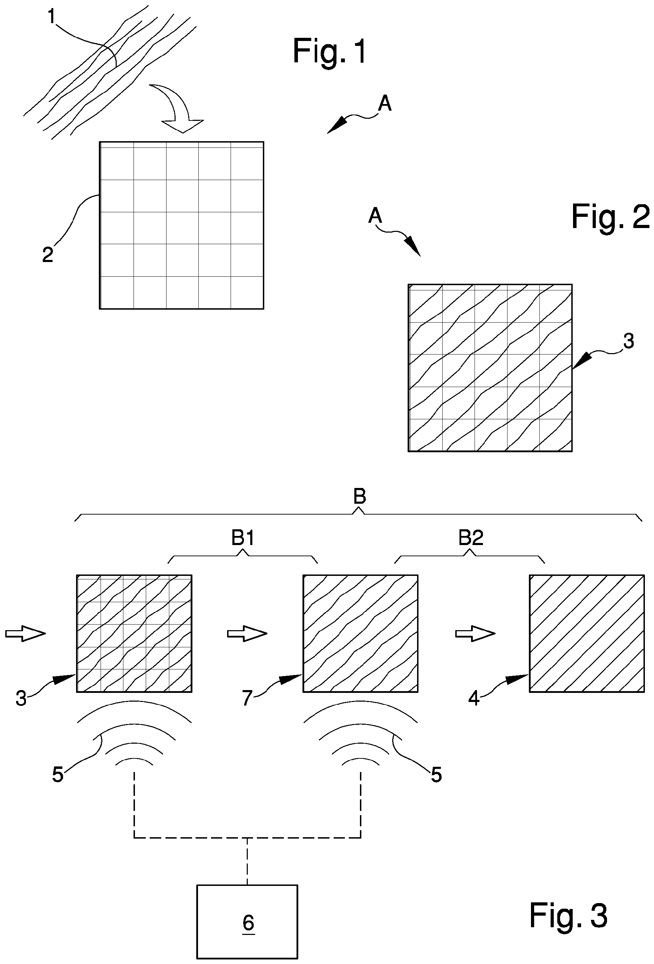

In the present embodiment, the source 6, shown schematically in figure 3, is unique and of the type of an oven with microwaves generated by at least one magnetron.

Different embodiments cannot be ruled out wherein, instead of a microwave oven an alternative source of electromagnetic microwaves 5 is provided. Conveniently, the step of heating B comprises a sub-step of carbonization B1 adapted to carbonize the treatable composite 3.

The step of heating B, in other words, provides for a first step of heating of the treatable composite 3 up to a temperature of about 1000°C so as to give rise to a carbonization of the composite itself.

During carbonization, the characteristic chemical bonds of the precursor polymer are destroyed and the volatile parts evaporate with the result that only the carbonaceous part remains intact.

This way, a carbonized treatable composite is obtained, schematically illustrated in Figure 3 and indicated by the reference number 7.

The step of heating B also provides for a sub-step of graphitization B2 adapted to graphitize the carbonized treatable composite 7 at a higher temperature than the temperature achieved in the sub-step of carbonization B1.

The carbonized treatable composite 7, therefore, undergoes a second step of heating up to temperatures above 2500°C so as to form the finished composite 4.

In the sub-step of graphitization B2, the carbonized treatable composite 7 undergoes transformations which lead to a finishing of the carbonaceous components, i.e., giving the carbonized treatable composite 7 that typical chemical structure of CC composites, and which is characterized by the advantageous properties of extra lightness and high thermal and mechanical strength.

In particular, the sub-step of graphitization B2 is induced by the microwaves 5, i.e., it is in this step that the microwaves 5 are used to obtain a localized and uniform heating of the treatable composite 3.

This step, in fact, is the most energy-consuming and the use of the microwaves 5 allows a considerable saving.

In the present embodiment, the procedure provides for the use of microwaves 5 both for implementing the sub-step of carbonization B1 and for implementing the sub-step of graphitization B2.

Alternative embodiments cannot be ruled out in which, e.g., only the sub-step of graphitization B2 is made through the use of microwaves 5.

Advantageously, the procedure comprises at least a step of densification of the treatable composite 3, for the sake of simplicity not shown in the figures.

In particular, such step consists in taking the treatable composite 3 and subjecting it to further sub-steps of carbonization B1 and/or sub-steps of graphitization B2 so as to offset the loss of mass due to the evaporation of the volatile components.

The step of densification comprises at least a further sub-step of carbonization B1 of the treatable composite 3 adapted, as a matter of fact, to carbonize the treatable composite 3 so as to obtain a carbonized treatable composite 7.

The step of densification also comprises at least a further step of graphitization B2 of the carbonized treatable composite 7.

In the present embodiment, in fact, the finished composite 4 is re-impregnated with polymeric material and undergoes a further sub-step of carbonization B1 and sub-step of graphitization B2.

The step of densification can be repeated several times until the finished composite 4 reaches the desired density values.

The solution cannot be ruled out wherein the step of densification only concerns the sub-step of carbonization B1.

In this case, the carbonized treatable composite 7 doesn't immediately undergo the sub-step of graphitization B2, but is re-impregnated with polymer and undergoes a further sub-step of carbonization B1.

Also in this case the step of densification can be repeated several times until the carbonized treatable composite 7 reaches the desired density value. Conveniently, the procedure comprises a step of pretreatment of the carbonaceous matrix 2.

This pretreatment consists in subjecting a basic matrix to transformation processes (thermal and physical-chemical treatments) adapted to transform the basic matrix into the carbonaceous matrix 2.

In the present discussion, by basic matrix is meant a substance or a mixture of substances, usually of an organic or polymeric origin, intended to be transformed into a carbonaceous matrix 2.

In the present embodiment, the pretreatment, also in this case not shown for the sake of simplicity, is intended to promote the grafting of carbon fibers 1 derived from PAN, without ruling out the possible grafting of fibers derived from other suitable precursors.

In particular, such pretreatment comprises thermo-chemical transformation processes and allows making specific carbonaceous matrices 2 starting from phenolic type base matrices, in particular combined with suitable chemical compatibilizers such as, e.g., other thermosetting matrices (e.g. epoxy), amines, or other matrices with similar properties.

It is known, in fact, that modified epoxy phenolic matrices lend themselves better to the grafting of fibers derived from PAN for making composite materials.

Advantageously the pretreatment step comprises at least in part a treatment of the basic matrix with microwaves, so as to carry out the thermo-chemical processes mentioned above and required for the treatment of the carbonaceous matrix itself.

In particular, the use of microwaves facilitates the heat treatment of the modified epoxy phenolic matrices and, therefore, the grafting of the fibers derived from PANs.

Different embodiments cannot however be ruled out in which the pretreatment of the carbonaceous matrix 2 provides for the use of different matrices to the modified epoxy phenolic ones.

Matrices with high residual carbonaceous residues cannot in fact be ruled out such as cyanate ester, bismaleimide, benzoxazine, etc., which facilitate the impregnation both of fibers derived from PAN, and fibers derived from several other precursors other than PAN as long as cheaper and more easily available than fibers derived from Rayon.

In this regard, as an example, the fibers are mentioned derived from phenolic precursors and known commercially as Kynol®.

It has in practice been ascertained how the described invention achieves the proposed objects and in particular the fact is underlined that the procedure for the production of carbon fiber composites permits lowering the cost of the obtained composites.

The devised procedure, in fact, permits reducing the amount of energy and time required to produce the composites themselves thanks to the use of microwaves. The microwaves, in fact, permit performing localized heating, i.e., targeted to the composite to be heated, avoiding also heating the surrounding environment as was the case with traditional ovens.

This allows a considerable saving of energy and hence of costs.

Furthermore, the heating that takes place by the interaction of matter with the microwaves occurs much more quickly than the heating obtained by convection or conduction or irradiation processes, thereby also permitting a considerable saving of time and therefore of costs.

Again, because of the type of interaction between matter and electromagnetic waves, the heating of the composite takes place starting from the inside to the outside of the portion of material, unlike what occurs in traditional ovens where the heat penetrates from the outside to the inside.

This way, a more uniform temperature increase is achieved and this results in a significant improvement in the properties of the finished composite.

The use of microwaves in the pretreatment of the carbonaceous matrix, on the other hand, facilitates the use of matrices such as phenolic, epoxy-phenolic, cyanate ester, bismaleimide, benzoxazine, which facilitate the impregnation of fibers derived from PAN, cheaper and more easily available than, for example, the fibers derived from Rayon or from other precursors.

## Claims

1. Procedure for the realization of composite materials made of carbon fiber comprising:
- a step of arrangement (A) of carbon fibers (1) in at least one carbonaceous matrix (2) to form a treatable composite (3);
- a step of heating (B) of said treatable composite (3) able to transform said treatable composite (3) into a finished composite (4),
said step of heating (B) being at least partially induced by electromagnetic microwaves (5) generated by at least one source (6) of electromagnetic waves and able to increase the temperature of said treatable composite (3);
**characterized in that** said carbon fibers (1) are preformed and **in that** said carbonaceous matrix (2) is a carbon-phenolic composite material.

2. Procedure according to claim 1, **characterized in that** said preformed fibers are obtained from at least one of the following weaving processes: "weaving", "braiding", "knitting" and "stitching".

3. Procedure according to one or more of the preceding claims, **characterized in that** said step of heating (B) comprises:
- at least a sub-step of carbonization (B1) able to carbonize said treatable composite (3);
- at least a sub-step of graphitization (B2) able to graphitize said carbonized treatable composite (7) at a higher temperature than that achieved in said sub-step of carbonization (B1).

4. Procedure according to one or more of the preceding claims, **characterized in that** said sub-step of graphitization (B2) is induced by said microwaves (5).

5. Procedure according to one or more of the preceding claims, **characterized in that** it comprises at least a step of densification of said treatable composite (3).

6. Procedure according to one or more of the preceding claims, **characterized in that** said step of densification comprises at least a further sub-step of carbonization (B1) of said treatable composite (3).

7. Procedure according to one or more of the preceding claims, **characterized in that** said step of densification comprises at least a further sub-step of graphitization (B2) of said treatable composite (3).

8. Procedure according to one or more of the preceding claims, **characterized in that** it comprises a step of pretreatment of said carbonaceous matrix (2) able to transform a basic matrix into said carbonaceous matrix (2).

9. Procedure according to one or more of the preceding claims, **characterized in that** said step of pretreatment comprises at least in part a treatment of said basic matrix with said microwaves (5).

## Patentansprüche

1. Verfahren zur Realisierung von Verbundwerkstoffen aus Kohlefaser umfassend:
einen Schritt der Anordnung (A) von Kohlenstofffasern (1) in mindestens einer kohlenstoffhaltigen Matrix (2), um einen behandelbaren Verbundstoff (3) zu bilden;
einen Schritt des Erhitzens (B) des behandelbaren Verbundstoffs (3), der in der Lage ist, den behandelbaren Verbundstoff (3) in einen fertigen Verbundstoff (4) umzuwandeln, wobei der Schritt des Erhitzens (B) zumindest teilweise durch elektromagnetische Mikrowellen (5) induziert wird, die von mindestens einer Quelle (6) elektromagnetischer Wellen erzeugt werden und die Temperatur des behandelbaren Verbundstoffs (3) erhöhen können;
**dadurch gekennzeichnet, dass** die Kohlenstofffasern (1) vorgeformt sind und dass die kohlenstoffhaltige Matrix (2) ein Kohlenstoff-Phenol-Verbundmaterial ist.

2. Verfahren nach Anspruch 1, **dadurch gekennzeichnet, dass** die vorgeformten Fasern aus mindestens einem der folgenden Webverfahren erhalten werden: "Weben", "Flechten", "Stricken" und "Nähen".

3. Verfahren gemäß einem oder mehreren der vorstehenden Ansprüche, **dadurch gekennzeichnet, dass** der Schritt des Erhitzens (B) umfasst:
mindestens einen Teilschritt der Karbonisierung (B1), der in der Lage ist, den behandelbaren Verbundstoff zu karbonisieren (3);
mindestens einen Teilschritt der Graphitisierung (B2), der in der Lage ist, den karbonisierten, behandelbaren Verbundstoff (7) bei einer höheren Temperatur als der in dem Teilschritt der Karbonisierung (B1) erreichten Temperatur zu graphitisieren.

4. Verfahren gemäß einem oder mehreren der vorhergehenden Ansprüche, **dadurch gekennzeichnet, dass** der Teilschritt der Graphitisierung (B2) durch die Mikrowellen (5) induziert wird.

5. Verfahren gemäß einem oder mehreren der vorstehenden Ansprüche, **dadurch gekennzeichnet, dass** es mindestens einen Schritt der Verdichtung des behandelbaren Verbundes (3) umfasst.

6. Verfahren nach einem oder mehreren der vorhergehenden Ansprüche, **dadurch gekennzeichnet, dass** der Schritt der Verdichtung mindestens einen weiteren Teilschritt der Karbonisierung (B1) des behandelbaren Verbundstoffs (3) umfasst.

7. Verfahren nach einem oder mehreren der vorhergehenden Ansprüche, **dadurch gekennzeichnet, dass** der Schritt der Verdichtung mindestens einen weiteren Teilschritt der Graphitisierung (B2) des behandelbaren Verbundstoffs (3) umfasst.

8. Verfahren nach einem oder mehreren der vorstehenden Ansprüche, **dadurch gekennzeichnet, dass** es einen Schritt der Vorbehandlung der kohlenstoffhaltigen Matrix (2) umfasst, der in der Lage ist, eine Basismatrix in die kohlenstoffhaltige Matrix (2) umzuwandeln.

9. Verfahren nach einem oder mehreren der vorstehenden Ansprüche, **dadurch gekennzeichnet, dass** der Schritt der Vorbehandlung zumindest teilweise eine Behandlung der Basismatrix mit den Mikrowellen (5) umfasst.

## Revendications

1. Procédé pour la réalisation de matériaux de composite réalisés en fibre de carbone comprenant :
- une étape d'agencement (A) de fibres de carbone (1) dans au moins une matrice carbonée (2) pour former un composite traitable (3) ;
- une étape de chauffage (B) dudit composite traitable (3) capable de transformer ledit composite traitable (3) en un composite fini (4),
ladite étape de chauffage (B) étant au moins partiellement induite par des micro-ondes (5) électromagnétiques générées par au moins une source (6) d'ondes électromagnétiques et capable d'élever la température dudit composite traitable (3) ; **caractérisée en ce que** lesdites fibres de carbone (1) sont préformées et **en ce que** ladite matrice carbonée (2) est un matériau composite carbone-phénolique.

2. Procédé selon la revendication 1, **caractérisée en ce que** lesdites fibres préformées sont obtenues à partir d'au moins l'un des processus de tissage suivant : « tissage », « tressage », « tricotage » et « piquage ».

3. Procédé selon une ou plusieurs des revendications précédentes, **caractérisée en ce que** ladite étape de chauffage (B) comprend :
- au moins une sous-étape de carbonisation (B1) capable de carboniser ledit composite traitable (3) ;
- au moins une sous-étape de graphitisation (B2) capable de graphitiser ledit composite traitable carbonisé (7) à une température supérieure à celle obtenue dans ladite sous-étape de carbonisation (B1).

4. Procédé selon une ou plusieurs des revendications précédentes, **caractérisée en ce que** ladite sous-étape de graphitisation (B2) est induite par lesdites micro-ondes (5).

5. Procédé selon une ou plusieurs des revendications précédentes, **caractérisée en ce qu'**elle comprend au moins une étape de densification dudit composite traitable (3).

6. Procédé selon une ou plusieurs des revendications précédentes, **caractérisée en ce que** ladite étape de densification comprend au moins une sous-étape supplémentaire de carbonisation (B1) dudit composite traitable (3).

7. Procédé selon une ou plusieurs des revendications précédentes, **caractérisée en ce que** ladite étape de densification comprend au moins une sous-étape supplémentaire de graphitisation (B2) dudit composite traitable (3).

8. Procédé selon une ou plusieurs des revendications précédentes, **caractérisée en ce qu'**elle comprend une étape de prétraitement de ladite matrice carbonée (2) capable de transformer une matrice basique en ladite matrice carbonée (2).

9. Procédé selon une ou plusieurs des revendications précédentes, **caractérisée en ce que** ladite étape de prétraitement comprend au moins en partie un traitement de ladite matrice basique avec lesdites micro-ondes (5).
